# EUROPEAN PATENT SPECIFICATION

(11) **EP 1 516 455 B1**
(45) Date of publication and mention of the grant of the patent: **20.09.2006**
(21) Application number: 03732568.5
(22) Date of filing: 13.06.2003
(51) Int. Cl.: H04L 12/28

(54) **MODULE FOR INTEGRATION IN A HOME NETWORK**
MODUL ZUR INTEGRATION IN EINEM HAUSNETZWERK
MODULE D'INTEGRATION DANS UN RESEAU DOMESTIQUE

(30) Priority: 26.06.2002 DE 10228605
(43) Date of publication of application: 23.03.2005
(73) Proprietor: Thomson Licensing, 92100 Boulogne-Billancourt (FR)
(72) Inventor: KÖHLER, Ralf, 30455 Hannover (DE)
(74) Representative: Schäferjohann, Volker
(86) International application number: PCT/EP2003/006233
(87) International publication number: WO 2004/004222

(56) References cited:
- EP-A- 1 117 214
- WO-A-00/62505
- WO-A-01/86914
- WO-A-01/86948
- CORCORAN P M: "MAPPING HOME-NETWORK APPLIANCES TO TCP/IP SOCKETS USING A THREE-TIERED HOME GATEWAY ARCHITECTURE" IEEE TRANSACTIONS ON CONSUMER ELECTRONICS, IEEE INC. NEW YORK, US, vol. 44, no. 3, August 1998 (1998-08), pages 729-736, XP000851577 ISSN: 0098-3063

## Description

The invention relates to a module for integration in a home network with individual devices which are connected to one another and communicate among one another via one or more protocols, the home network having at least one connecting device which allows communication with an external network.

A home network is understood to be the amalgamation of a plurality of functionally quite different devices e.g. in a residence or a small office. The devices are e.g. communications devices, such as telephone and fax, entertainment devices, such as television, DVD player, etc., and work devices, such as computer and the like. In some instances, domestic appliances and household equipment, such as refrigerator and heating, are also connected to such a network. The devices are set up to communicate with one another by means of defined protocols (e.g. HAVi, Home Audio/Video Interoperability, or UPnP, Universal Plug and Play) and to exchange digital or alternatively analog data among one another. This opens up the possibility of data which are present in a specific device of the home network also being made available to the other devices that are integrated in the home network. Thus, it is conceivable, by way of example, for music which is present in the form of a file in a computer in the study to be reproduced via a stereo system in the living room. At the same time, it is possible, under certain circumstances, for the stereo system to be controlled by means of a menu displayed on a television that is integrated in the home network.

In addition to the possibility of the internal exchange of data, however, some devices furthermore also have connections to external networks: the telephone is connected to a telephone network (analog, ISDN) and the television is connected to a cable network which serves to transmit video and audio signals, but is also increasingly used for the transmission of data for a computer. The computer is connected by a modem to the Internet with its diverse services (World Wide Web, Usenet etc.) or to comparable networks. In this case, each device independently produces a connection to the associated network and is then able to localize and to retrieve the required data there and subsequently to process them. However, this presupposes that, in the residence, in the house or in the office, the various external networks are routed through to the respective device, which is associated with a considerable installation outlay.

Therefore, it has already been proposed to centralize the network accesses. Thus, US-A 5,886,732 shows the possibility of combining a plurality of network accesses (NIU: Network Interface Units) of different providers in a central station which interacts with a plurality of home networks via a switched node (switch hub), such a network comprising e.g. a set-top electronic unit STE without the otherwise customary network access means. A plurality of devices (CVCR, DCAM, DTV1) that process video and audio signals are connected to the STE via a data bus. Accordingly, the set-top electronic unit STE no longer performs the function of realizing the network access, but still has the task of conditioning the received data for the connected devices.

The system in accordance with WO 01/56233 is also based on this principle: a central telephone access system which can utilize the various services offered, such as analog, ISDN, DSL, serves as access to the telephone network and to the Internet for connected computers and other devices: here, too, the central station only has the task of producing the network access.

The situation is similar in accordance with EP 1 017 206 A2: the individual devices of the home network are connected to the Internet via a central network access (home gateway) located outside the home network. Each device thus sets up its access to the Internet independently of the other devices of the network. The system makes it possible to access the various devices in the home network from the Internet via a single address. Document WO 01/86948 discloses a data management system on a home network including a browser and a database, which comprises data descriptive of content information available from remote suppliers.

In the case of the previously known systems, although the individual devices no longer have to establish the network access, they continue to be responsible for finding or filtering out the desired data in the external network and converting them into formats suitable for reproduction. This task is associated with a considerable outlay, however, since video and audio data, in particular, are likely to be present in different formats which, under certain circumstances, cannot be processed by the devices, and even the formats of data which describe the respective data contents (metadata) vary. Moreover, the transmission protocols (e.g. IP (Internet Protocol), UDP (User Datagram Protocol) or RTP (Real-Time Transport Protocol)) used in the external network are also not necessarily compatible with the transmission protocols of the home network. Although UPnP, for example, is based on the Internet Protocol IP, that still does not mean, however, that a terminal communicating by means of UPnP can process specific audio/video data by means of IP. Therefore, a search unit must know all or at least the predominant formats and protocols in order to be able to receive and process the data that are stored in the external network with a corresponding format. Furthermore, a search unit must be able to establish connection with various providers of data in order to be able to find the stored data. The abovementioned tasks of a search unit require a high outlay on software and associated hardware, which causes high costs.

Consequently, the invention is based on the problem of reducing the outlay on software and hardware required for the search units of devices in a home network, so that the connected devices are simpler in their construction and hence more cost-effective.

In order to solve the problem, the invention provides a module for integration in a home network having the further features that the module has one or more search units in particular for finding data available at providers in the external network and is able to receive the data and/or the metadata describing their content and can make them available to the devices of the home network. In this way, the search function is performed by a central module so that the connected devices no longer have to provide this function themselves. As a result, said devices can be produced more cost-effectively. The module may be realized both in the form of a computer program which uses available electronics in the home network, for example in the computer or in the connecting device, and as an autonomous device with electronics and programming. The search unit must on the one hand know the addresses of providers via which it can obtain data, and on the other hand it must be able to communicate with said providers and evaluate the received data. The search unit therefore has to know what details in what form it must give the various providers in order to acquire the desired data. In this case, providers are not only to be understood as commercial providers of data which make available "video/music on demand" or live TV or radio programs, for example, the operators of private pages on the Internet or the known search engines on the Internet also constitute providers. In principle, a provider is anyone who makes data available to others free of charge or for payment via a network.

The term data is to be understood both as files and as data streams which in the actual sense do not constitute files. By way of example, live TV programs are received by an IP-TV server directly from a satellite and converted in real time into an IF data stream to which devices in the home network can be connected. In this case, no audio/video files are stored, rather only data are forwarded to the terminal.

The module can be improved further by having a format converter, which converts the data of the external network into a format which corresponds to one of the formats which are defined for the exchange of data in the home network and are readable for the devices in the home network. In this way, a possibly required format conversion of the data requested from the external network is also shifted from the individual devices of the home network to the module, so that the individual devices of the home network are simplified further.

In an advantageous manner, the format converter is able, moreover, to convert data in a format which corresponds to one of the formats which are defined for the exchange of data in the home network and are readable for the devices in the home network into a format used in the external network. In this way, data which are requested from the home network by the external network can also be made available without any further outlay.

According to the invention, the search unit and/or the format converter can be updated. This has the advantage, inter alia, that, in the event of newly emerging formats or in the event of changes to the addresses or communication methods of providers in the external network, only the module or the format converter and the search unit have to be set to these new formats or the new addresses and methods, while the other devices in the network can still have recourse to a form that is readable for them. Thus, these devices do not need to be exchanged or updated. The updating may be effected, for example, by means of information from the external network made available by the providers. However, it is equally conceivable for a service provider to collate this information and make it available as a chargeable service, whether by direct dispatch via the network or by the provision of a storage medium holding the information.

In an advantageous manner, the module communicates with the other devices of the home network by means of one of the protocols defined for the home network. In this way, the programming of the individual devices of the home network is very simple: the devices only have to communicate with the module in the formats defined for the home network. For the inquiring device, the situation is as if the connecting device had the data inquired about in an appropriate format for the inquiring device. The fact that the connecting device first of all itself obtains the respective data from the external network and, if appropriate, subjects them to a format conversion remains hidden from the inquiring device. The module could thus be manifested as a standard device in the home network, for example as a central media store.

According to the invention, the module converts control data from a protocol defined for the home network into a protocol used by the external network or by a provider of data. This is of interest in particular for the case where the transmitted data are data streams, as occur for example with "video/audio on demand" or live TV programs. The conversion of the control data allows the devices in the home network to control the source of the data without knowing the corresponding protocols. Control data may be, for example, commands such as START, STOP, PAUSE, FAST FORWARD etc.

In order to be able to adapt the data transmission into the home network, if appropriate, to the transmission speed of the external network, or in order to provide a buffer for a format conversion, the module has a memory, which stores the received data and, if appropriate, the data converted into the format defined for the home network.

The invention is particularly beneficial if the external network is the Internet. It is precisely in this network that numerous data are available which, however, first have to be found in order to be able to be used by the respective end user device. On the Internet, it has also been possible to establish different protocols for data transmission and formats in which data are stored or made available in files or data streams, so that the search units must be able to understand and interpret a plurality of protocols and formats. In this case, the searching through the external network is performed by programs referred to as agents. The content descriptions of the providers in the external network are gradually evaluated and compared with the inquiry from the home network. If a match is found, the corresponding data are downloaded via the connecting device.

The data from the external network are typically text, audio and/or video data. Since, as a general rule, home networks are primarily used for exchanging multimedia data, these types of data are those which are requested the most often. However, the data may, of course, also involve other types of data for the connected devices, for example updates for the software on a computer, program updates for a washing machine, weather data or forecasts for a heating system, present energy costs for storage heating, and much more.

According to the invention, the module communicates with the devices of the home network via a data bus. Via the data bus, information about the type and setting of the respective device is exchanged, so that the various devices can identify themselves and adapt themselves to one another, that is to say communicate their respective type and settings, and, moreover, data are exchanged and forwarded, which data are then used for reproduction and/or recording in the respective device. In this case, the communication between the devices can be effected both in a wire-based manner and in a wire-free manner (e.g. Bluetooth, etc.).

In an advantageous manner, the module is integrated in the connecting device. In this way, a single device performs all the tasks necessary for communication with the external network, that is to say both the connection to the external network and the search for data and the conversion of the data into suitable formats. It goes without saying, however, that the module may also be an autonomous device which can be integrated without difficulty into an already existing home network.

In accordance with a further improvement the module is able to receive and process inquiries from the external network and send data from the home network into the external network. This makes it possible, by way of example, for a user, even from outside the home network, via the external network, to establish contact with the devices in the home network and to retrieve the data which can be made available by them, without having to rely on a special protocol for this purpose.

Furthermore, in this way, one's own data can also be made available to other persons. For this purpose, it is advantageous to provide a method for the monitoring and control of the access rights and for identification.

It goes without saying that combinations of advantageous features likewise lie within the scope of validity of the invention.

In order to provide a better understanding, the invention will be explained in more detail below using an exemplary embodiment. For this purpose:

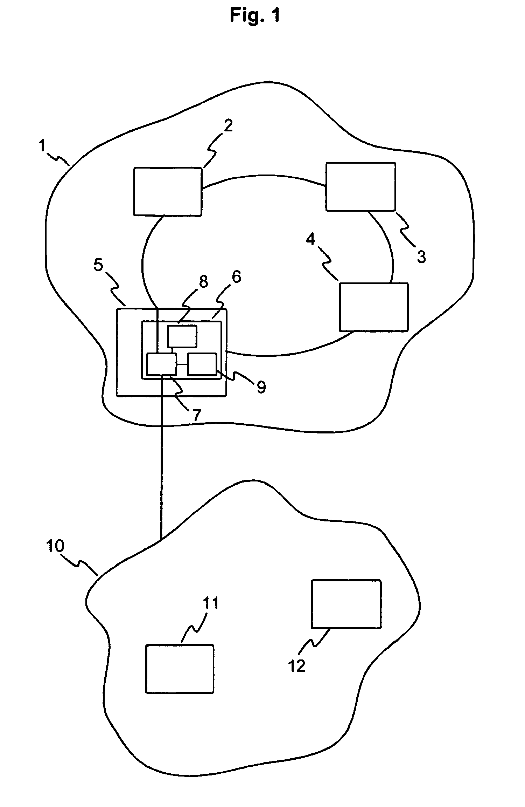

- figure 1: shows a diagrammatic illustration of a module according to the invention in a home network which communicates with an external network via a connecting device.

A home network is designated by 1. A plurality of devices 2, 3, 4, 5 are connected to one another in this local network. Said devices are typically one or a plurality of computers, and also reproduction devices for sound and picture information, such as e.g. video devices, DVD or CD players. The devices communicate among one another in accordance with specific protocols, which makes it possible for one device to be controlled by another or for the data available in one device to be made available to other devices as well. Moreover, the devices inform one another of their settings, so that an adaptation that normally has to be performed manually is effected automatically. Various protocols, such as HAVi or UPnP, geared specifically to such local amalgamations of devices have become established for this.

The communication with an external network, e.g. the Internet, which is marked by the reference symbol 10, poses certain problems, however, since dedicated protocols, e.g. TCP/IP, are defined for this, which are generally not understood except by computers. In the external network 10, however, providers 11, 12 hold data which could actually be reproduced and/or recorded by the devices 2, 3, 4 of the home network 1. Said data involves e.g. pieces of music or else cinema films or texts. For access to the corresponding data, the home network 1 has a connecting device 5, which produces the connection to the external network 10, and also a module 6, in which a search unit 7 is integrated. The search unit 7 establishes contact with the providers 11, 12 and serves for finding the desired data in the external network 10.

The module 6 controls the data exchange protocols of the external network 10 and is able to understand and evaluate the formats used by the various providers 11, 12 for describing the content of data. For this purpose, said module contains, under certain circumstances, a plurality of submodules (not illustrated) which are set to the most important formats for describing data contents. For all the other devices 2, 3, 4 of the home network 1, insofar as they wish to access such data, the module 6 performs the task of finding corresponding data in the external network 10.

Insofar as the devices 2, 3, 4 can process the data directly, they are transferred directly. However, the module 6 also contains a format converter 8 which possibly performs a format conversion. The module 6 communicates with the devices 2, 3, 4 of the home network 1 in accordance with one of the protocols defined for the home network. It accepts e.g. the inquiries of the other devices 2, 3, 4 for specific contents and issues a corresponding search job to the search unit 7. Consequently, to the inquiring devices 2, 3, 4, the module 6 appears as a carrier of the desired data, as if it were a central media server, for example, on which the desired data are stored. In order to adapt the module 6 to the transmission speed of the external network 10 a memory 9 is provided for the module 6, the data from the external network 10 being stored in said memory.

## Claims

1. A module (6) for integration in a home network (1) with individual devices which are connected to one another and communicate among one another via one or more protocols defined for the home network (1), the home network (1) having at least one connecting device (5) which allows communication with an external network (10), the module (6) being able to receive data and/or metadata describing the content of the data available at providers (11, 12) in the external network (10) and to make them available to the devices (2, 3, 4) of the home network (1), **characterized in that** the module (6) has one or more search units (7) for searching in the external network (10) for the availability of specific data at the providers (11, 12).

2. The module (6) as claimed in claim 1, wherein it has a format converter (8), which converts the data of the external network (10) into a format which corresponds to one of the formats which are defined for the exchange of data in the home network (1) and are readable for the devices (2, 3, 4) in the home network (1).

3. The module (6) as claimed in claim 2, **wherein** the format converter (8) converts data in a format which corresponds to one of the formats which are defined for the exchange of data in the home network (1) and are readable for the devices (2, 3, 4) in the home network (1) into a format used in the external network (10).

4. The module (6) as claimed in one of claims 1-3, wherein the search unit (7) and/or the format converter (8) can be updated.

5. The module (6) as claimed in one of the preceding claims, wherein the module (6) communicates with the other devices (2, 3, 4) of the home network (1) by means of one of the protocols defined for the home network (1).

6. The module (6) as claimed in one of the preceding claims, wherein it converts control data from a protocol defined for the home network (1) into a protocol used by the external network (10) or by a provider (11, 12) of data.

7. The module (6) as claimed in one of the preceding claims, wherein it has a memory (9), which stores the received data and/or the data converted into the format defined for the home network (1).

8. The module (6) as claimed in one of the preceding claims, **wherein** the external network (10) is the Internet.

9. The module (6) as claimed in one of the preceding claims, wherein the data from the external network (10) are text, audio and/or video data.

10. The module (6) as claimed in one of the preceding claims, wherein it communicates with the devices (2, 3, 4) of the home network (1) via a data bus.

11. The module (6) as claimed in one of the preceding claims, wherein it is integrated into the connecting device (5).

12. The module (6) as claimed in one of the preceding claims, wherein it is able to receive and process inquiries from the external network (10) and send data from the home network (1) into the external network (10).

## Patentansprüche

1. Modul (6) zur Integration in einem Heimnetzwerk (1) mit einzelnen miteinander verbundenen Geräten, die über ein oder mehrere für das Heimnetzwerk (1) definierte Protokolle untereinander kommunizieren, wobei das Heimnetzwerk (1) zumindest ein Verbindungsgerät (5) aufweist, das eine Kommunikation mit einem externen Netz (10) erlaubt, und in der Lage ist, die Daten und/oder die ihren Inhalt beschreibenden Metadaten zu empfangen und diese den Geräten (2, 3, 4) des Heimnetzwerkes (1) zur Verfügung zu stellen **dadurch gekennzeichnet, dass** das Modul (6) eine oder mehrere Sucheinheiten (7) zum Auffinden von bei Anbietern (11, 12) im externen Netz (10) verfügbaren Daten aufweist.

2. Modul (6) nach Anspruch 1, **dadurch gekennzeichnet, dass** es einen Formatumwandler (8) aufweist, der die Daten des externen Netzes (10) in ein Format umwandelt, das einem der für den Austausch von Daten im Heimnetzwerk (1) definierten und für die Geräte (2, 3, 4) im Heimnetzwerk (1) lesbaren Formate entspricht.

3. Modul (6) nach Anspruch 2, **dadurch gekennzeichnet, dass** der Formatumwandler (8) Daten in einem Format, das einem der für den Austausch von Daten im Heimnetzwerk (1) definierten und für die Geräte (2, 3, 4) im Heimnetzwerk (1) lesbaren Formate entspricht, in ein im externen Netz (10) verwendetes Format umwandelt.

4. Modul (6) nach einem der Ansprüch1 1-3, **dadurch gekennzeichnet, dass** die Sucheinheit (7) und/oder der Formatumwandler (8) aktualisierbar ist.

5. Modul (6) nach einem der vorhergehenden Ansprüche, **dadurch gekennzeichnet, dass** das Modul (6) mit den anderen Geräten (2, 3, 4) des Heimnetzwerkes (1) mittels eines der für das Heimnetzwerk (1) definierten Protokolle kommuniziert.

6. Modul (6) nach einem der vorhergehenden Ansprüche, **dadurch gekennzeichnet, dass** es Steuerdaten aus einem für das Heimnetzwerk (1) definierten Protokoll in ein vom externen Netz (10) oder von einem Anbieter (11, 12) von Daten verwendetes Protokoll umsetzt.

7. Modul (6) nach einem der vorhergehenden Ansprüche, **dadurch gekennzeichnet, dass** es einen Speicher (9) aufweist, der die empfangenen und/oder die in das für das Heimnetzwerk (1) definierte Format umgewandelten Daten speichert.

8. Modul (6) nach einem der vorhergehenden Ansprüche, **dadurch gekennzeichnet, dass** das externe Netz (10) das Internet ist.

9. Modul (6) nach einem der vorhergehenden Ansprüche, **dadurch gekennzeichnet, dass** die Daten aus dem externen Netz (10) Text-, Audio- und/oder Videodaten sind.

10. Modul (6) nach einem der vorhergehenden Ansprüche, **dadurch gekennzeichnet, dass** es über einen Datenbus mit den Geräten (2, 3, 4) des Heimnetzwerkes (1) kommuniziert.

11. Modul (6) nach einem der vorhergehenden Ansprüche, **dadurch gekennzeichnet, dass** es in das Verbindungsgerät (5) integriert ist.

12. Modul (6) nach einem der vorhergehenden Ansprüche, **dadurch gekennzeichnet, dass** es in der Lage ist, Anfragen aus dem externen Netz (10) entgegenzunehmen und zu verarbeiten und Daten aus dem Heimnetzwerk (1) in das externe Netz (10) zu versenden.

## Revendications

1. Module (6) d'intégration dans un réseau domestique (1) comportant des dispositifs individuels qui sont connectés les uns aux autres et communiquent entre eux par l'intermédiaire d'un ou plusieurs protocole(s) défini(s) pour le réseau domestique (1), le réseau domestique (1) comportant au moins un dispositif de connexion (5) qui permet la communication avec un réseau externe (10), le module (6) pouvant recevoir des données et/ou métadonnées décrivant le contenu des données disponibles au niveau de fournisseurs (11, 12) du réseau externe (10) et les mettre à la disposition des dispositifs (2, 3, 4) du réseau domestique (1), **caractérisé en ce qu'**il comporte une ou plusieurs unité(s) de recherche (7) pour rechercher dans le réseau externe (10) des données spécifiques disponibles au niveau des fournisseurs (11, 12).

2. Module (6) selon la revendication 1, comportant un convertisseur de format (8) qui convertit les données du réseau externe (10) en un format qui correspond à l'un de formats qui sont définis pour l'échange de données dans le réseau domestique (1) et sont lisibles par les dispositifs (2, 3, 4) du réseau domestique (1).

3. Module (6) selon la revendication 2, dans lequel le convertisseur de format (8) convertit les données en un format qui correspond à l'un des formats qui sont définis pour l'échange de données dans le réseau domestique (1) et sont lisibles par les dispositifs (2, 3, 4) du réseau domestique (1) en un format utilisé dans le réseau externe (10).

4. Module (6) selon l'une des revendications 1 à 3, dans lequel l'unité de recherche (7) et/ou le convertisseur de format (8) peuvent être mis à jour.

5. Module (6) selon l'une des revendications précédentes, qui communique avec les autres dispositifs (2, 3, 4) du réseau domestique (1) au moyen d'un des protocole(s) défini(s) pour le réseau domestique (1).

6. Module (6) selon l'une des revendications précédentes, qui convertit les données de commande provenant d'un protocole défini pour le réseau domestique (1) en un protocole utilisé par le réseau externe (10) ou par un fournisseur de données (11, 12).

7. Module (6) selon l'une des revendications précédentes, qui comporte une mémoire (9) qui enregistre les données reçues et/ou les données converties dans le format défini pour le réseau domestique (1).

8. Module (6) selon l'une des revendications précédentes, dans lequel le réseau externe est Internet.

9. Module (6) selon l'une des revendications précédentes, dans lequel les données provenant du réseau externe (10) sont du texte, des données audio et/ou vidéo.

10. Module (6) selon l'une des revendications précédentes, qui communique avec les dispositifs (2, 3, 4) du réseau domestique (1) par l'intermédiaire d'un bus de données.

11. Module (6) selon l'une des revendications précédentes, qui est intégré au dispositif de connexion (5).

12. Module (6) selon l'une des revendications précédentes, capable de recevoir et traiter des demandes émanant du réseau externe (10) et d'envoyer des données provenant du réseau domestique (1) au réseau externe (10).
